Europäisches Patentamt

European Patent Office

Office européen des brevets

(11) Numéro de publication: **0 117 813**
**A1**

## (12) DEMANDE DE BREVET EUROPEEN

(21) Numéro de dépôt: **84400352.5**

(22) Date de dépôt: **21.02.84**

(51) Int. Cl.³: **G 01 S 7/44**, F 41 G 5/08

(30) Priorité: **22.02.83 FR 8302835**

(43) Date de publication de la demande: **05.09.84**
**Bulletin 84/36**

(84) Etats contractants désignés: **DE GB IT**

(71) Demandeur: **THOMSON-CSF, 173, Boulevard Haussmann, F-75379 Paris Cedex 08 (FR)**

(72) Inventeur: **Marcy, Raymond, THOMSON-CSF SCPI 173, bld Haussmann, F-75379 Paris Cedex 08 (FR)**

(74) Mandataire: **Benoit, Monique et al, THOMSON-CSF SCPI 173, Bld Haussmann, F-75379 Paris Cedex 08 (FR)**

(54) **Procédé de transfert de pistes radar et/ou de désignation d'objectif.**

(57) Le procédé de transfert entre deux véhicules ($V_1$, $V_2$) consiste à effectuer la mesure des coordonnées de position ($X_{p1}$, $Y_{p1}$, $X_{p2}$, $Y_{p2}$) des véhicules dans un référentiel commun ($X_L$, $Y_L$), à mesurer les orientations ($\gamma_1$, $\gamma_2$) des lignes de foi ($O_1F_1$, $O_2F_2$) des véhicules par rapport à un référentiel angulaire commun extérieur (N), à mesurer les coordonnées polaires ($\rho_1$, $\theta_1$) d'une cible (C) par rapport au premier véhicule ($V_1$) et à l'axe (XY) rattachant les deux véhicules, à prévoir et à calculer les coordonnées polaires ($\rho''_1$, $\theta''_1$) de la cible dans sa position extrapolée (C') à la fin du transfert, par rapport au premier véhicule ($V_2$) et à l'axe (XY) et à déterminer, par triangulation, les coordonnées polaires ($\rho_2$, $\theta_2$, $\theta'_2$) de la cible dans sa position extrapolée (C') par rapport au second véhicule ($V_2$), à l'axe (XY) et à la ligne de foi ($O_2F_2$) du second véhicule.

## PROCEDE DE TRANSFERT DE PISTES RADAR
## ET/OU DE DESIGNATION D'OBJECTIF

La présente invention est relative à un procédé de transfert de désignation d'objectif et/ou de pistes radar entre au moins deux points, par exemple entre deux véhicules.

Dans certaines applications il peut être nécessaire de transférer les coordonnées d'un objectif depuis un premier système, détecteur, "désignant" l'objectif, vers un deuxième système, chargé par exemple d'intercepter l'objectif. Un exemple d'une telle application est un système d'arme comportant des véhicules détecteurs, munis de systèmes radars, et des véhicules portant les missiles (ou autres) d'interception de l'objectif.

Le même problème se pose pour effectuer la transmission de pistes d'un radar porté par un véhicule à un autre porté par un autre véhicule, afin d'effectuer une corrélation entre les différentes pistes.

Le problème du transfert de la désignation d'un objectif se pose avec une particulière acuité lorsque les véhicules concernés ne sont pas en vue directe l'un avec l'autre : en effet, cela interdit d'utiliser les méthodes (notamment optiques) habituelles pour définir la position relative des véhicules, c'est-à-dire la ligne joignant les deux véhicules, la connaissance de cette ligne étant indispensable audit transfert.

Un objet de l'invention est de définir un procédé de transfert de désignation d'objectif et/ou de pistes radar d'un véhicule porteur d'un radar à un ou plusieurs autres véhicules, non en vue directe du premier, porteurs soit de radars également, soit de rampes de lancement d'engins ou de canons, dans le cas de systèmes d'armes, ceci dans le but soit de corréler des pistes radar, soit d'affecter une cible particulière à une rampe et éviter la poursuite d'une même cible par plusieurs rampes dans le cas par exemple où plusieurs batteries éloignées les unes des autres sont associées à une unité centrale de détection.

Plus précisément, l'invention a pour objet un procédé de transfert de piste radar et/ou de désignation d'objectif entre au moins deux dispositifs mobiles, portant chacun un référentiel dont la direction de référence, liée au dispositif, est dite ligne de foi ; le procédé comporte les étapes suivantes :

- détermination des coordonnées du point origine de chacun des référentiels, dans un troisième référentiel, commun aux deux premiers référentiels ;

- détermination de l'orientation de chacune des lignes de foi par rapport à une direction de référence extérieure et commune aux deux premiers référentiels ;

- détermination des coordonnées polaires de l'objectif par rapport au référentiel du premier des deux dispositifs ;

- détermination de la direction de l'axe commun rattachant les deux points origine par rapport à la ligne de foi du premier dispositif ;

- détermination des coordonnées polaires de l'objectif par rapport à l'axe commun ;

- détermination de la direction de l'axe commun par rapport à la ligne de foi du deuxième dispositif ;

- détermination des coordonnées polaires de l'objectif par rapport au référentiel du deuxième des deux dispositifs.

D'autres objets, particularités et résultats de l'invention apparaîtront dans la description qui suit, d'exemples de réalisation de dispositifs mettant en oeuvre le procédé suivant l'invention, donnée à l'aide des figure qui représentent :

- la figure 1, une représentation schématique du transfert de la position d'une cible d'un véhicule à un autre lorsque ceux-ci ne sont pas en vue directe,

- la figure 2, une représentation schématique de la définition de l'orientation de la ligne de foi d'un véhicule par rapport à la référence angulaire commune extérieure,

- la figure 3, le schéma d'une vanne de flux utilisée dans le cadre de l'invention, et

- la figure 4, le schéma d'un déclinatoire utilisé dans le cadre de l'invention.

On a indiqué ci-dessus l'importance du transfert des pistes radar et/ou désignation d'objectif, par exemple dans un système d'armes dans lequel, par exemple, un premier véhicule porteur d'un radar et un second véhicule porteur d'une rampe de lancement, d'un canon ou d'un autre radar, ne sont pas en vue directe et le premier véhicule doit transmettre au second, par exemple celui porteur d'une rampe de lancement des informations commandant l'orientation de ladite rampe sur la cible détectée par le radar du premier véhicule. Lorsqu'il s'agit de deux radars on appelle cette transmission un transfert de pistes.

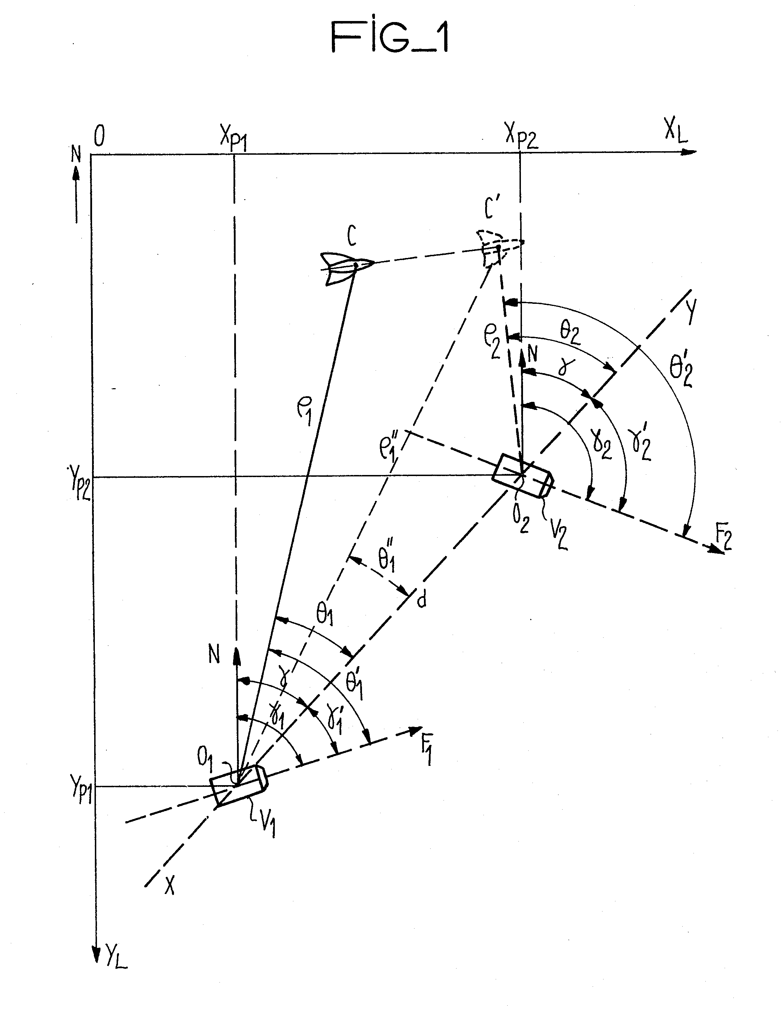

La figure 1 représente de façon schématique dans quelles conditions deux dispositifs mobiles, tels que des véhicules, $V_1$ et $V_2$ peuvent se définir l'un par rapport à l'autre pour permettre par exemple au véhicule $V_1$ de transmettre au véhicule $V_2$ la position d'une cible C, lorsque ces véhicules ne sont pas en vue directe et qu'il n'y a pas de rattachement direct possible entre eux.

La notion de rattachement est liée à la transmission entre les deux véhicules d'informations de position d'une cible extérieure qui nécessite que l'on puisse définir, entre les deux véhicules, un axe commun auquel ils peuvent se référer mutuellement.

Pour que la transmission de la position de la cible C puisse se faire du véhicule $V_1$ au véhicule $V_2$, il est nécessaire de :

1. connaître, donc mesurer, les coordonées de position $X_{p1}$, $Y_{p1}$ et $X_{p2}$, $Y_{p2}$ des véhicules $V_1$ et $V_2$ dans un référentiel commun $X_L$, $Y_L$, constitué par exemple par une carte réalisée selon la projection LAMBERT ;

2. mesurer les orientations $\gamma_1, \gamma_2$ des lignes de foi $O_1F_1$, $O_2F_2$ des véhicules $V_1$ et $V_2$ par rapport à un référentiel angulaire extérieur commun N ; on rappelle que la ligne de foi d'un véhicule est une direction de référence liée à ce véhicule ; dans le cas présent, on prend par exemple comme ligne de foi l'axe radio-électrique de l'antenne du radar porté par le véhicule ;

3. mesurer les coordonnées polaires $\rho_1$, $\theta_1$ de la cible C par rapport au véhicule $V_1$ et à l'axe commun XY rattachant les deux véhicules $V_1$ et $V_2$ ;

4. le cas échéant, prévoir et calculer les coordonnées polaires "$\rho_1$, $\theta_1$" de la cible dans sa position C', extrapolée par rapport à sa position C, pour tenir compte du temps nécessaire au transfert, par rapport au

4

véhicule $V_1$ et à l'axe commun XY ;

5. déterminer alors les coordonnées polaires $\rho_2$, $\theta_2$ de la cible, dans sa position C' par rapport au véhicule $V_2$ et à l'axe commun XY.

Suivant l'invention, selon un processus décrit ci-après, les orientations $\gamma_1$ et $\gamma_2$ des lignes de foi des véhicules sont définies à partir du nord magnétique N, choisi comme référence angulaire commune extérieure. En effet, ce choix permet de mettre en oeuvre des dispositifs plus simples et moins coûteux que ceux qui procèderaient l'un à la recherche du nord géographique à l'aide d'un chercheur nord, coûteux, et l'autre à l'utilisation d'un goniomètre radioélectrique dont la précision s'avère insuffisante.

Le radar du véhicule $V_1$ définit la position de la cible C en mesurant sa distance $\rho_1$ à partir de l'origine $O_1$ des coordonnées dans le véhicule $V_1$, et son orientation $\theta'_1$ par rapport à sa ligne de foi $(O_1F_1)$. Pour effectuer le transfert de cette piste radar au radar du véhicule $V_2$, il est nécessaire de définir l'orientation $\theta_1$ de la cible par rapport à l'axe XY passant par les points $O_1$ et $O_2$.

Dans ces conditions, connaissant les angles $\gamma$, orientation du nord magnétique par rapport à XY, et $\theta'_1$, il faut pour calculer l'angle $\theta_1$ donnant l'orientation de la cible C par rapport à l'axe XY, connaître l'orientation $\gamma_1$ de la ligne de foi $O_1F_1$ du véhicule $V_1$ par rapport au nord magnétique N.

Pour effectuer le calcul, il faut encore définir l'angle $\gamma'_1$ définissant l'orientation de la ligne de foi $O_1F_1$ par rapport à l'axe XY.

Le calcul de l'angle $\theta_1$ est alors le suivant :

$$\theta_1 = \theta'_1 - \gamma'_1$$
$$\gamma'_1 = \gamma_1 - \gamma$$
d'où $\quad \theta_1 = \theta'_1 - \gamma_1 + \gamma \qquad (1)$

La valeur de la distance $\underline{d}$ entre les deux véhicules $V_1$ et $V_2$ étant connue à partir de coordonnées $X_{p1}$, $Y_{p1}$, $X_{p2}$, $Y_{p2}$, la valeur du rayon vecteur $\rho''_1$ étant déterminée par le radar du véhicule $V_1$ comme on l'a déjà indiqué, on calcule à partir de ces valeurs et de celle de l'angle $\theta''_1$, les coordonnées $\rho_2$, $\theta_2$ de la cible C' par rapport au véhicule $V_2$, par exemple dans le triangle $O_1C'O_2$ dans lequel :

$$\rho_2 = \sqrt{d^2 + \rho''^2_1 - 2d\rho''_1 \cos \theta''_1}$$

$$et \; \theta_2 = 180° - arc \cos \left( \frac{d^2 + \rho'^2_2 - \rho''^2_1}{2d \, \rho''_2} \right)$$

Il est nécessaire alors de connaître l'orientation $\theta'_2$ de la cible C' par rapport à la ligne de foi $O_2F_2$ du véhicule $V_2$ et, pour ce faire, définir l'orientation $\gamma_2$ de la ligne de foi $O_2F_2$ par rapport au nord magnétique N. Par analogie avec ce qui a été calculé pour le véhicule $V_1$, on a :

$$\theta'_2 = \theta_2 + \gamma'_2$$
$$\gamma'_2 = \gamma_2 - \gamma$$
$$et \quad \theta'_2 = \theta_2 - \gamma + \gamma_2 \quad (2)$$

Dans ces formules $\gamma'_2$ est l'orientation de la ligne de foi $O_2F_2$ par rapport à l'axe XY.

En outre, $\gamma$, qui est l'angle entre la droite XY et la direction N, est calculé à partir des coordonnées $X_{p1}$, $Y_{p1}$, $X_{p2}$ et $Y_{p2}$ des véhicules $V_1$ et $V_2$.

On notera dans ce qui précède, selon un mode de réalisation préféré, l'introduction de la position C' de la cible. Cette position C' est celle extrapolée au moment où le transfert se fait effectivement, moment différent de celui où la mesure des coordonnées $\rho_1 \theta_1$ s'effectue. En effet, entre ce moment et celui de la fin du transfert, la cible s'est déplacée d'une quantité qui peut ne pas être négligeable.

Ce qui vient d'être exposé constitue un procédé de rattachement du véhicule $V_2$ au véhicule $V_1$, qui ne peut fournir la valeur de l'angle de pointage $\theta'_2$ que si les orientations $\gamma_1$ et $\gamma_2$ des lignes de foi $O_1F_1$ et $O_2F_2$ des deux véhicules considérés sont définies par rapport à une référence angulaire commune extérieure par exemple le nord magnétique.

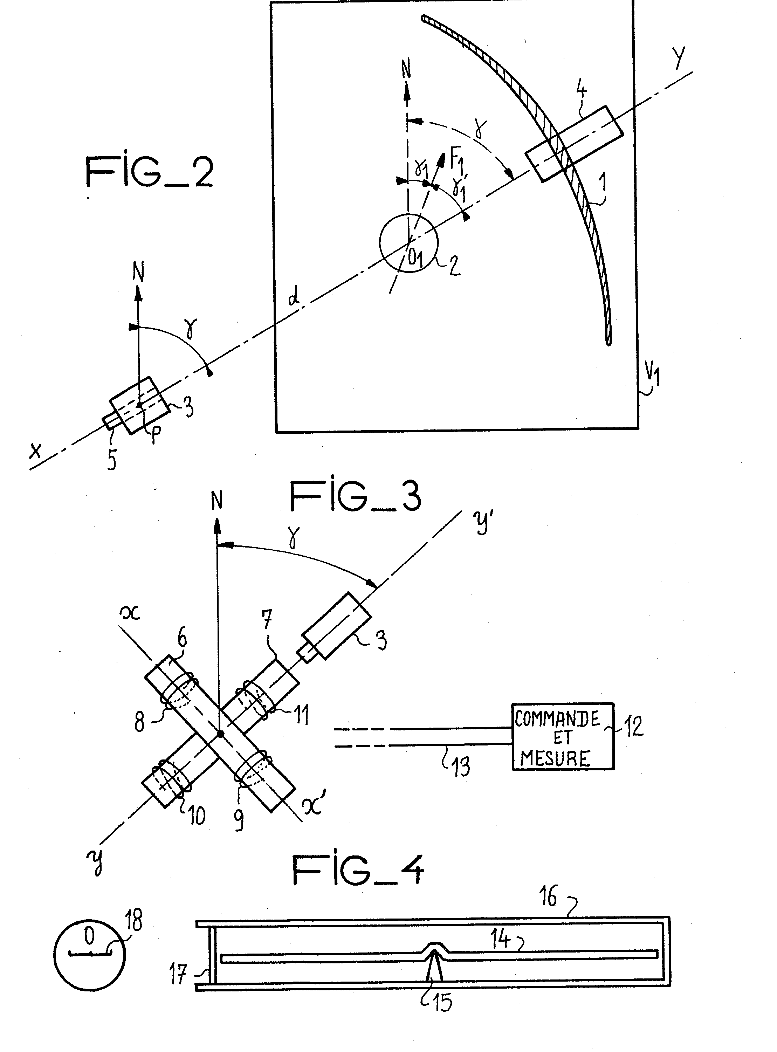

La figure 2 représente de façon schématique comment cette définition de l'orientation de la ligne de foi d'un véhicule va être réalisée, suivant l'invention, par rapport au nord magnétique.

Pour simplifier l'exposé, on considère un seul véhicule $V_1$, porteur d'un radar, par exemple symbolisé par son antenne 1 dont la position angulaire est repérée à l'aide d'un codeur angulaire 2 par rapport à la ligne de foi de ce véhicule. Celle-ci est repérée $O_1F_1$ et fait un angle $\gamma_1$ avec

la direction du nord magnétique N. Par définition la ligne de foi du véhicule $V_1$ est donc donnée par le zéro du codeur angulaire 2 de l'antenne radar 1.

Cependant, le véhicule $V_1$ présentant très généralement une masse métallique importante, de l'ordre souvent de 30 tonnes, il n'est pas possible de mesurer l'orientation du Nord magnétique à bord du véhicule, la précision demandée de la mesure (de l'ordre du milliradian) ne pouvant être atteinte. Aussi, la mesure de l'orientation de la direction du nord magnétique se fait de préférence à l'extérieur du véhicule considéré, en un point P, situé à une certaine distance dudit véhicule, de l'ordre d'une quinzaine de mètres au moins dans l'exemple numérique précédent.

La mesure de l'orientation de la direction du nord magnétique qui se fait à l'extérieur (point P) alors que la ligne de foi du véhicule se trouve définie à bord du véhicule, rend nécessaire de définir un axe de référence reliant le point P à un point particulier du véhicule. Ce point particulier est choisi par exemple comme le centre de rotation de l'antenne radar qui, en règle générale, est également le centre de rotation du codeur. Cet axe de référence, appelé aussi axe de rattachement, est défini de façon optique en utilisant une source 3 à faisceau parallèle disposée au point P et une lunette autocollimatrice 4 disposée sur l'antenne radar 1 et dont l'axe optique coincide avec l'axe radioélectrique XY de l'antenne. La source 3, elle, est associée à un viseur 5. Pour déterminer l'orientation du Nord magnétique par rapport à cet axe de référence XY, on oriente le viseur 5 de la source 3 à faisceau parallèle de façon que cette source 3 éclaire la lunette 4 associée à l'antenne radar 1. L'antenne est ensuite orientée jusqu'à ce que les axes optiques de la source 3 et de la lunette 4 coïncident. Le codeur angulaire 2 de l'antenne alors affiche un angle $\gamma'_1$ entre la direction de l'axe XY de l'antenne et de la ligne de foi $O_1F_1$ correspondant au zéro du codeur. Connaissant l'orientation de la direction du Nord magnétique par rapport à l'axe de référence, soit $\gamma$, on en déduit l'angle $\gamma_1$ définissant l'orientation de la ligne de foi du véhicule par rapport au nord magnétique, soit $\gamma_1 = \gamma + \gamma'_1$.

Suivant l'invention, il faut mesurer au point P extérieur, l'orientation de la direction du Nord magnétique par rapport à l'axe XY de référence. On utilise pour ce faire soit une vanne de flux, soit un déclinatoire.

La figure 3 représente de façon schématique une vanne de flux. Elle comporte de façon préférentielle deux barreaux de ferrite orthogonaux 6 et 7 et quatre bobinages 8, 9, 10, 11, disposés deux par deux (8-9 et 10-11) aux extrémités des barreaux, un ensemble 12 de commande et de mesure et un câble de liaison 13 entre les bobines et l'ensemble de commande. Le champ magnétique terrestre auquel la vanne de flux est soumise induit, dans les bobinages disposés sur les barreaux de ferrite, des courants dont l'intensité représente la valeur du champ magnétique dans ses projections sur les axe xx' et yy', axes longitudinaux respectivement des barreaux 6 et 7. Ces valeurs sont transmises à l'ensemble de commande 12 qui définit à distance l'orientation du champ magnétique par rapport aux axes xx', yy'. Pour définir l'angle $\gamma$ entre l'axe XY et la direction du nord magnétique, la vanne de flux est disposée de façon que, par exemple, son axe yy' coïncide avec l'axe XY de rattachement, c'est-à-dire avec l'axe optique de l'ensemble source 3- viseur 5. Cet angle $\gamma$ est alors déterminé par la valeur qui est affichée par l'ensemble de commande 12. Dans l'utilisation d'une vanne de flux, la valeur de l'angle $\gamma$ définissant l'orientation du Nord magnétique par rapport à l'axe du système ou axe de rattachement est donc représentée par une grandeur numérique affichée dans l'ensemble de commande 12 et transmise à distance par des moyens électriques à un calculateur associé.

Par ailleurs, étant donné que la valeur de l'angle $\gamma'_1$ définissant l'orientation de la ligne de foi $O.F_1$ du véhicule $V_1$ par rapport à l'axe de rattachement est mesurée par le codeur 2 angulaire de l'antenne 1, il est possible d'introduire automatiquement les grandeurs $\gamma$ et $\gamma'_1$ dans le calculateur associé au système. Celui-ci est ainsi un système semi-automatique, l'opérateur n'effectuant que les opérations décrites précédemment, c'est-à-dire installer les appareils nécessaires au point P situé à distance du véhicule considéré. L'opérateur n'effectue en ce point aucune mesure angulaire, il peut porter des objets métalliques sans apporter de perturbations aux mesures effectuées lors de la mise en place.

Toutefois il faut noter que l'utilisation d'une vanne de flux impose de

8

définir l'horizontalité de l'appareil avec une précision de l'ordre de O,2 mrd. Ce résultat peut être obtenu en utilisant une base calante à deux bulles montée sur le trépied qui supporte la source 3 et le viseur 5.

Il faut encore noter que le principe de la mesure effectuée comme il a été dit précédemment implique que le véhicule est arrêté.

La figure 4 présente de façon schématique un déclinatoire qui peut être utilisé dans le cadre de l'invention pour mesurer l'angle $\gamma$, définissant l'orientation du nord magnétique par rapport à l'axe de rattachement.

Un déclinatoire est constitué par une aiguille aimantée 14, dont la longueur est de l'ordre de 20 à 30 cm, capable de pivoter autour d'un pivot 15 sur lequel elle repose en son centre. L'aiguille mobile autour du pivot est disposée dans un tube 16 protecteur. Sur la tranche de ce tube, une paroi transparente 17 porte une graduation 18 qui est vue en plan sur la partie gauche de la figure 4. Cette graduation repère de façon précise l'écart en position de l'aiguille aimantée 14 par rapport au zéro du déclinatoire, zéro de la graduation 18.

Lorsqu'un déclinatoire est utilisé, l'opérateur doit le pré-orienter avec un compas primaire pour le mettre dans sa plage de fonctionnement. L'opérateur doit ensuite l'orienter finement pour amener l'aiguille 14 au zéro de la graduation 18. Pour faire ces opérations, l'opérateur dispose par exemple d'un codeur avec un stator et un rotor. La référence du rotor coïncide mécaniquement avec le zéro de la graduation de l'échelle 18 du déclinatoire. Ceci veut dire que si le codeur affiche zéro, l'origine de rotation du rotor coïncide avec le zéro de l'échelle 18. L'opérateur oriente alors le déclinatoire de sorte que l'aiguille aimantée 14 soit au zéro de la graduation 18. La référence du rotor se trouve alors dans la direction du nord magnétique et si précédemment le stator avait été orienté pour mettre sa référence dans la direction de l'axe XY, le codeur affiche directement l'angle $\gamma$.

La mesure de l'angle $\gamma$ étant effectuée par l'opérateur en observant la position d'un index sur un cercle gradué qui représente le stator, elle n'est donc pas automatique. Par contre, tout comme dans le cas précédemment décrit de la vanne de flux, l'angle $\gamma'_1$ est mesuré par le codeur angulaire de l'antenne. L'utilisation d'un déclinatoire est donc semi-

9

manuelle.

Le déclinatoire et la source à faisceau parallèle 3 sont montés sur un trépied qui est installé par l'opérateur au point P distant du véhicule considéré.

Dans ce cas, comme dans le précédent, le principe de la mesure implique que le véhicule est arrêté.

10

REVENDICATIONS

1. Procédé de transfert de pistes radar et/ou de désignation d'objectif entre au moins deux dispositifs mobiles $(V_1 V_2)$, portant chacun un référentiel dont la direction de référence, liée au dispositif, est dite ligne de foi $(O_1 F_1, O_2 F_2)$, le procédé étant caractérisé par le fait qu'il comporte les étapes suivantes :

- détermination des coordonnées du point origine $(0_1, O_2)$ de chacun des référentiels, dans un troisième référentiel $(OX_L Y_L)$, commun aux deux premiers référentiels ;

- détermination de l'orientation $(\gamma_1, \gamma_2)$ de chacune des lignes de foi par rapport à une direction de référence (N) extérieure et commune aux deux premiers référentiels ;

- détermination des coordonnées polaires $(\rho_1, \Theta'_1)$ de l'objectif (C) par rapport au référentiel du premier $(V_1)$ des deux dispositifs ;

- détermination de la direction $(\gamma'_1)$ de l'axe commun (XY) rattachant les deux points origine $(O_1, O_2)$ par rapport à la ligne de foi $(O_1 F_1)$ du premier dispositif $(V_1)$ ;

- détermination des coordonnées polaires $(\rho_1, \Theta_1)$ de l'objectif par rapport à l'axe commun (XY) ;

- détermination de la direction $(\gamma'_2)$ de l'axe commun (XY) par rapport à la ligne de foi $(O_2 F_2)$ du deuxième dispositif ;

- détermination des coordonnées polaires de l'objectif par rapport au référentiel du deuxième des deux dispositifs.

2. Procédé selon la revendication 1, caractérisé par le fait qu'il comporte en outre, après l'étape de détermination des coordonnées polaires de l'objectif par rapport au référentiel du premier des deux dispositifs, une étape de prévision et calcul des coordonnées polaires de l'objectif dans sa position extrapolée (C') au moment de la fin du transfert.

3. Procédé suivant l'une des revendications précédentes, caractérisé par le fait que l'étape de détermination de l'orientation d'une ligne de foi (2) par rapport à la direction de référence commune comporte la détermination de l'orientation $(\gamma)$ de la direction de référence (N) en un point (P) situé à l'extérieur du dispositif $(V_1)$ et à une certaine distance (d) de celui-ci, par rapport à un axe de référence (XY) passant par ce point, par le rattachement de ce dernier axe par des moyens optiques (3-4-5) à la ligne de foi ($O_1F_1$) du dispositif, et la détermination de l'orientation ($\gamma'_1$) dudit axe de référence par rapport à la ligne de foi ($O_1F_1$), l'orientation de la ligne de foi du dispositif ($V_1$) par rapport à la direction de référence (N) étant l'angle ($\gamma_1$) somme des valeurs absolues de l'angle ($\gamma$) définissant l'orientation de la direction de référence par rapport à l'axe de référence (XY) et de l'angle ($\gamma'_1$) définissant l'orientation dudit axe par rapport à la ligne de foi.

4. Procédé suivant la revendication 3, caractérisé par le fait que l'axe de référence (XY) est défini par le point (P) extérieur et un point (O1) du dispositif coïncidant avec le centre de rotation de l'antenne radar disposée sur le dispositif.

5. Procédé suivant la revendication 4, caractérisé par le fait qu'on met en place au point (P) extérieur une source optique (3) à faisceau parallèle et un viseur (5) optique et, sur l'antenne (1) radar du dispositif ($V_1$), une lunette autocollimatrice (4) dont l'axe coïncide avec l'axe radioélectrique de l'antenne ; qu'on déplace l'ensemble source (3) et viseur (5) jusqu'à obtenir l'illumination de la lunette (4) par la source (3) ; qu'on fait tourner l'antenne (1) jusqu'à obtenir la coïncidence des axes optiques de la source (3) et de la lunette (4), le codeur angulaire (2) de l'antenne affichant alors un angle ($\gamma_1$) définissant la direction de la ligne de foi ($O_1F_1$) par rapport à l'axe radioélectrique de l'antenne coïncidant alors avec l'axe de référence.

6. Procédé suivant l'une des revendications précédentes, caractérisé par le fait que la direction de référence extérieure (N) est le Nord magnétique.

7. Dispositif de mise en oeuvre du procédé suivant l'une des revendications précédentes, comprenant sur un véhicule une antenne (1) radar dont la position angulaire de son axe radioélectrique est déterminée par un codeur angulaire (2) dont le zéro définit l'orientation de la ligne de foi dudit véhicule, caractérisé par le fait qu'il comprend en un point (P) éloigné du véhicule, un ensemble qui est composé d'une source (3) de lumière et d'un viseur (5) éclairant une lunette autocollimatrice (4) dis-

12

posée sur l'antenne (1) radar dont l'axe optique coïncide avec l'axe radioélectrique de l'antenne, l'ensemble source (3), viseur (5) et lunette (4) définissant un axe de référence (XY) lorsque les axes optiques de la source (3) et de la lunette coïncident suite à la rotation de l'antenne radar, le codeur angulaire (2) affichant alors une valeur d'angle $(Y'_1)$ définissant l'orien tation de la ligne de foi $(O_1F_1)$ du véhicule $(V_1)$ par rapport à l'axe de référence.

8. Dispositif suivant la revendication 7, caractérisé par le fait qu'au point (P) extérieur au véhicule est disposé un moyen de détermination de l'orientation (angle $\gamma$) du nord magnétique (N) par rapport à l'axe de référence (XY).

9. Dispositif suivant la revendication 8, caractérisé par le fait que le moyen de détermination de l'orientation angulaire du nord magnétique par rapport à l'axe de référence est une vanne de flux.

10. Dispositif suivant la revendication 8, caractérisé par le fait que le moyen de détermination de l'orientation angulaire du nord magnétique par rapport à l'axe de référence est un déclinatoire.

# FIG_1

0117813

FIG_2

FIG_3

COMMANDE
ET
MESURE

FIG_4

Office européen
des brevets

**RAPPORT DE RECHERCHE EUROPEENNE**

0117813
Numéro de la demande

EP 84 40 0352

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-1 113 395 (CONTRAVES) <br> * Figures 1,2,7; page 1, colonne de droite, ligne 1 - page 3, colonne de gauche, ligne 2; page 4, colonne de droite, ligne 45 - page 5, colonne de droite, ligne 15 * | 1-10 | G 01 S 7/44 <br> F 41 G 5/08 |
| | --- | | |
| Y | FR-A-1 424 049 (AKTIEBOLAGET BOFORS) <br> * Figures 1,2; page 1, colonne de gauche, ligne 1 - page 6, colonne de droite, ligne 8 * | 1-10 | |
| | --- | | |
| Y | FR-A-2 377 026 (SOCIETE DE FABRICATION D'INSTRUMENTS DE MESURE) <br> * En entier * | 3-10 | |

| | | | DOMAINES TECHNIQUES RECHERCHES (Int. Cl. ³) |
|---|---|---|---|
| A | US-A-2 710 720 (R.B. BLACKMAN et al.) <br> * Figures 1,2; colonne 1, ligne 15 - colonne 6, ligne 68 * | 1 | G 01 S <br> F 41 G <br> G 01 C |
| | --- | | |
| A | FR-A-1 439 801 (E. ROMBOUT et al.) <br> * Figure 1; page 1, colonne de gauche, ligne 1 - page 2, colonne de droite, ligne 38 * | 1 | |
| | ----- | | |

Le présent rapport de recherche a été établi pour toutes les revendications

| Lieu de la recherche | Date d'achèvement de la recherche | Examinateur |
|---|---|---|
| LA HAYE | 21-05-1984 | CANNARD J.M. |